# EUROPÄISCHE PATENTSCHRIFT

(11) **EP 2 448 989 B1**
(45) Veröffentlichungstag und Bekanntmachung des Hinweises auf die Patenterteilung: **22.10.2014**
(21) Anmeldenummer: 10722327.3
(22) Anmeldetag: 10.05.2010
(51) Int. Cl.: C08G 59/18, C09D 163/00

(54) **2-KOMPONENTEN KASCHIERKLEBSTOFF**
2-COMPONENT LAMINATING ADHESIVE
ADHÉSIF DE LAMELLATION À DEUX COMPOSANTS

(30) Priorität: 30.06.2009 DE 102009027329
(43) Veröffentlichungstag der Anmeldung: 09.05.2012
(73) Patentinhaber: Henkel AG & Co. KGaA, 40589 Düsseldorf (DE)
(72) Erfinder: EICHELMANN, Holger, 40724 Hilden (DE); HÖLTGEN, Michael, 40591 Düsseldorf (DE)
(86) Internationale Anmeldenummer: PCT/EP2010/056310
(87) Internationale Veröffentlichungsnummer: WO 2011/000619

(56) Entgegenhaltungen:
- EP-A1- 0 797 608
- EP-A1- 1 219 656
- EP-A1- 1 437 393

## Beschreibung

Die Erfindung betrifft ein 2-Komponenten Bindemittel auf Basis einer Epoxidkomponente und einer Aminkomponente, die einen hohen Anteil an aromatischen Bestandteilen aufweisen. Die Erfindung betrifft weiterhin einen 2K-Kaschierklebstoff und ein 2K-Beschichtungsmittel, die dieses Bindemittelsystem enthalten.

Bekannt ist die US 7282543. Diese beschreibt eine Zusammensetzung auf wässriger Basis, die ein Polyepoxidharz enthält, das mindestens eine tertiäre Aminogruppe aufweist, wobei die Aminogruppe einen oder zwei Substituenten aufweist, die jeweils eine Epoxigruppe tragen. Als Vernetzer sind wässrige Polyaminoverbindungen beschrieben.

Bekannt ist die EP 1086 190. Diese beschreibt ein reaktives System für Foliensubstrate, das ein Epoxidharz auf Basis von Bisphenol A, F, Resorcin oder aliphatischen Polyolen mit Epoxidgruppen umfasst, sowie einen Vernetzer auf Basis von Amino- oder Carboxylgruppe aufweisende Verbindungen. Aromatische Gruppen enthaltende Vernetzer werden nicht beschrieben.

Bekannt ist die DE 4128487. Diese beschreibt Epoxiddispersionen, die über A-minhärter vernetzen können. Dabei sind die Epoxidbindemittel als Umsetzungsprodukte aus aromatischen Polyolen und Polyepoxiden beschrieben. Aminhaltige Polyepoxide werden nicht beschrieben, so werden keine Amine mit aromatischen Kernen und primären Aminogruppen beschrieben.

Weiterhin ist die EP 1219656 bekannt. Diese beansprucht eine Beschichtungszusammensetzung mit Gasbarriereeigenschaften, wobei eine Komponente einen Epoxidharz ist, dass mindestens eine Epoxiamin-Einheit aufweist und ein Derivat von mXDA ist, und der Härter eine Verbindung ist, durch Umsetzung von XDA mit Monocarbonsäure sowie polyfunktionellen Verbindungen, die danach eine Amidgruppe bilden.

Weiterhin ist die EP 1437393 bekannt. Diese beansprucht einen Klebstoff mit einer Epoxidharzkomponente und einem Härter für diese Epoxidharze, wobei das Epoxidharz mindestens 40 % von XDA Strukturen aufweist.

Weiterhin wird in der EP 0 797 608 eine 2-K Beschichtungszusammensetzung mit Barriereeigenschaften umfassend eine Polyepoxidkomponente und einen Polyaminhärter offenbart. Als Härter kann ein Aminaddukt aus Xylylendiamin und Resorcinoldiglycidylether eingesetzt werden.

Bei den 2K-Beschichtungsmitteln des Standes der Technik werden im allgemeinen mXDA oder pXDA als Vernetzer eingesetzt. Es handelt sich dabei um primäre a-romatische Amine. Solche Amine können unter verschiedenen Umgebungsbedingungen in die Folienmaterialien migrieren. Deswegen sollen solche Amine in Klebstoffen, die im verklebten Produkt mit Lebensmitteln in Kontakt kommen können, möglichst in verminderter Menge enthalten sein.

Ein weiterer Nachteil der oben beschriebenen Systeme ist die hohe Viskosität des gemischten Klebstoffs, so dass eine Applikation in dünner Schicht häufig problematisch ist. Um die Reaktionsmischung zu verdünnen, ist es bekannt, dass organische Lösemittel zugesetzt werden können. Solche organischen Lösemittel müssen jedoch aus der Schicht vor dem Verkleben oder vor einer Weiterverarbeitung entfernt werden. Dieser zusätzliche Verfahrensschritt ist aufwendig, außerdem ist es aus arbeitshygienischen Gründen notwendig, dass solche Lösemittel abgesaugt und vernichtet werden.

Aufgabe der vorliegenden Erfindung ist es deswegen eine 2K-Komponenten-Zusammensetzung zur Verfügung zu stellen, die aus einem Epoxidharz und aus niedrigviskosen Aminumsetzungsprodukten besteht. Ein weiterer Gegenstand der Erfindung sind 2K-Kaschierklebstoffe oder 2K-Überzugsmittel, auf Basis der 2K-Zusammensetzung. Ein weiterer Gegenstand der Erfindung ist die Verwendung solcher Beschichtungsmittel zur Herstellung von beschichteten Folien, die nur eine niedrige Durchlässigkeit für gasförmige oder diffusionsfähige Stoffe aufweisen, beispielsweise für Sauerstoff oder Aromastoffe. Eine weitere Aufgabe der Erfindung ist die Bereitstellung von Klebstoffen oder Überzugsmitteln aus entsprechenden Bindemitteln, die ohne Zusatz von Lösemitteln eine niedrige Verarbeitungsviskosität aufweisen.

Die Erfindung wird gelöst durch eine 2-Komponenten-Zusammensetzung bestehend aus einer Komponente A enthaltend ein Polymeres mit einem zahlenmittleren Molekulargewicht M_{N}, wie über GPC bestimmbar, von 250 bis 5000 g/mol, das mindestens 2 Epoxidgruppen pro Molekül aufweist, und einer Komponente B, enthaltend eine Verbindung der Formel (I)

(I) R¹-Phenyl-(-O- R²)ₐ

mit
R¹ = H, C₁ bis C₆ - Alkyl
R² = -O-CH₂-CHOH-CH₂-NH-CH₂-Phenyl-CH₂-NH₂,
a = 1,2 oder 3
wobei das Epoxid/Amin-Verhältnis, berechnet als NH-Gruppen, der Komponenten A und B zwischen 0,75: 1 bis 1,25 : 1 beträgt, dadurch gekennzeichnet, dass die Komponente A eine Verbindung der Formel (II) enthält:

(II) R³-Ring-(-CH₂-N(R⁴)_{b})_{c}

mit
R³= H, CH₃, C₂H₅
b = 1 oder 2
c = 1, 2, 3 oder 4
R⁴ = C₃bis C₈-Alkyl mit einer Epoxidgruppe
Ring = Phenyl, Biphenyl, Naphthyl.

Ein Bestandteil der erfindungsgemäßen 2K-Bindemittel-Zusammensetzung besteht aus der Komponente A, einem Polymeren auf Basis von Polyestern, Polyamiden, Poly(meth)acrylaten, Polyurethanen, Polyolefinen oder aromatischen Polyepoxiden. Es ist erfindungsgemäß notwendig, dass diese Polymere mindestens zwei Epoxidgruppen pro Molekül aufweisen. Dabei können die Epoxidgruppen über Epoxid-funktionellen Bausteine direkt bei der Polymersynthese eingebaut werden, alternativ ist es möglich, dass in einem Doppelbindungen aufweisenden Polymeren diese in Epoxidgruppen überführt werden. Eine weitere Möglichkeit besteht darin, Polymere mit OH-Gruppen oder mit Isocyanatengruppen mit niedermolekularen Epoxidverbindungen umzusetzen, die zusätzlich noch eine mit der OH-Gruppe oder der Isocyanatgruppe reaktive Gruppe aufweisen.

Eine Klasse von geeignete Basispolymeren sind OH-funktionalisierte Polyolefine.

Polyolefine sind dem Fachmann bekannt und können in vielen Molekularmassen erhalten werden. Solche Polyolefine auf Basis von Ethylen-, Propylen- oder höherkettigen α-Olefinen als Homo- oder Copolymer können entweder durch Copolymerisation von funktionelle Gruppen enthaltenden Monomeren oder durch Pfropfreaktionen funktionalisiert werden. Eine weitere Möglichkeit besteht darin, dass diese Basispolymere nachträglich beispielsweise durch Oxidation mit OH-Gruppen versehen werden.

Beispielsweise können als weitere Gruppe Basispolymere zur Herstellung der Komponente (A) ausgewählt werden aus der Gruppe von Olefin(co)polymeren, wie Ethylen-Acrylat-, Butyl-Kautschuk; Naturkautschuk; Styrol-Copolymere, einzeln oder in Mischung, wobei es sich bei den Copolymeren um statistische, alternierende, Pfropf- oder Block-Copolymere handelt.

Weitere Beispiele für Basispolymere sind auch thermoplastische Elastomere (TPE), die an sich bekannt sind. Hierunter versteht man beispielsweise thermoplastische Kautschuke. Erfindungsgemäß sind solche thermoplastischen Elastomere insbesondere ausgewählt aus der Gruppe der Styrol-Block-Polymeren, beispielsweise Styrol-Dien-Copolymere (SBS, SIS) Styrol-Ethylen/Butylen-Copolymere (SEBS) oder Styrol-Ethylen/Propylen-Styrol-Copolymere (SEPS, SEP).

Weitere olefinische Polymere, die als Basispolymere zur Herstellung der Komponente (A) geeignet sind, sind beispielsweise Homo- oder Copolymerisate des 1,3-Butadiens, 2-Methyl-1,3-butadiens (Isoprens), 2-Methyl-1,3-hexadiens, 2-Methyl-1,3-cyclopentadiens und weiterer copolymerisierbarer Monomere.

Die oben erwähnten olefinischen Basispolymere können mehrere ungesättigte Doppelbindungen enthalten. Diese können in der Polymerhauptkette enthalten sein und/oder sie sind in Seitenketten enthalten. Insbesondere sollen vinylische funktionelle Gruppe enthalten sein. Diese Doppelbindungen können nach bekannten Verfahren umgesetzt werden, so dass die Basispolymere Epoxidgruppen aufweisen. Die so erhaltenen Epoxidgruppenhaltigen Polymere sind als Komponente (A) im Rahmen der Erfindung geeignet. Weitere geeignete Basispolymere mit Polyolefinstruktur können funktionelle Gruppen enthalten, beispielsweise OH-Gruppen. Diese können dann nach bekannten Verfahren mit bifunktionellen Verbindungen umgesetzt werden, wobei diese Verbindungen eine Epoxidgruppe aufweisen sollen. Es werden geeignete Polymere für Komponente (A) mit EpoxidGruppen erhalten.

Eine weitere Klasse von geeigneten Basispolymeren sind Polyesterpolyole. Diese können durch Polykondensation von Säure- und Alkoholkomponenten gewonnen werden, insbesondere durch Polykondensation einer Polycarbonsäure oder eines Gemischs aus zwei oder mehr Polycarbonsäuren und einem Polyol oder einem Gemisch aus zwei oder mehr Polyolen. Als Polycarbonsäure sind solche mit einem aliphatischen, cycloaliphatischen, aromatischen oder heterocyclischen Grundkörper geeignet. Gegebenenfalls können anstatt der freien Carbonsäuren auch deren Säureanhydride oder deren Ester mit C₁₋₅-Monoalkoholen zur Polykondensation eingesetzt werden.

Als Diole zur Umsetzung mit den Polycarbonsäuren können eine Vielzahl von Polyolen eingesetzt werden. Beispielsweise sind aliphatische Polyole mit 2 bis 4 primären oder sekundären OH-Gruppen pro Molekül und 2 bis 20 C-Atomen geeignet. Ebenfalls eingesetzt werden können anteilsweise höherfunktionelle Alkohole. Weiterhin können als Diolkomponente Polyetherpolyole eingesetzt werden. Polyetherpolyole werden vorzugsweise durch Umsetzung von niedermolekularen Polyolen mit Alkylenoxiden erhalten, beispielsweise die Umsetzungsprodukte von Ethylenglykol, Propylenglykol oder den isomeren Butandiolen mit Ethylenoxid, Propylenoxid oder Butylenoxid. Verfahren zur Herstellung solcher Polyesterpolyole sind dem Fachmann bekannt und diese Produkte sind kommerziell erhältlich.

Eine weitere Klasse von Basispolymeren enthält ein Polyamid-Rückgrat. Polyamide sind Umsetzungsprodukte von Diaminen mit Di- oder Polycarbonsäuren. Durch gezielte Synthese ist es möglich, endständig OH-Gruppen in Polyamide einzuführen.

Eine weitere Klasse von Basispolymeren sind Polyole auf Basis von Acrylaten. Es handelt sich dabei um durch Polymerisation von (Meth)acrylestern hergestellte Polymere, wie Acrylsäure-, Methacrylsäure-, Crotonsäure- oder Maleinsäureester. Bevorzugt werden übliche C₁ bis C₁₅ -Alkylester der (Meth)acrylsäure polymerisiert.

Es können dabei auch OH-Gruppen tragenden Monomere enthalten sein. Gegebenenfalls können auch andere copolymerisierbare Monomere enthalten sein. Andere geeignete Poly(meth)acrylate sollen mindestens zwei OH-Gruppen aufweisen. Diese können bevorzugt endständig in dem Polymer vorhanden sein. Solche OHfunktionellen Poly(meth)acrylate sind dem Fachmann bekannt. Diese können dann nach bekannten Verfahren zu Epoxidgruppen funktionalisiert werden. Eine andere Arbeitsweise ergibt direkt Acrylatpolymere mit Epoxidgruppen. Dabei werden Monomere, die Glycidylgruppen enthalten, einpolymerisiert. Geeignete Polymerisationsverfahren sind dem Fachmann bekannt.

Die OH-Gruppe der Basispolymere können nach bekannten Verfahren mit niedermolekularen Verbindungen umgesetzt werden, die eine Epoxidgruppe enthalten sowie eine mit der OH-Gruppe reagierende Gruppe. Beispiele für solche Gruppen sind NCO-Gruppen, Halogene, Anhydride oder Ester. Nach Reaktion werden Polymere erhalten, die Epoxidgruppen aufweisen und als Komponente A geeignet sind.

Eine weitere Klasse von geeigneten Basispolymeren sind Polyurethane. Diese können durch Umsetzung von Polyolen, insbesondere Diolen und/oder Triolen mit Di- oder Tri-Isocyanat-Verbindungen hergestellt. Dabei werden die Mengenverhältnisse so gewählt, dass endständig NCO-funktionalisierte Prepolymere erhalten werden. Insbesondere sollen die Polymere linear sein, d.h. überwiegend aus Diolen und Diisocyanaten hergestellt werden. Eine zusätzliche Verwendung von geringen Anteilen an trifunktionellen Monomeren ist möglich.

Die bei der Synthese der PU-Polymere einsetzbaren Polyole und Polyisocyanate sind dem Fachmann bekannt. Es handelt sich dabei um die für Klebstoffanwendung bekannten monomeren aliphatischen, cycloaliphatischen oder aromatischen Polyisocyanate, insbesondere werden Di- oder Triisocyanate eingesetzt. Es können auch bekannte Oligomere, wie Biurete oder Isocyanurate, eingesetzt werden. Diese werden umgesetzt beispielsweise mit solchen Polyolen, die auch als Polyol für die Synthese von Polyestern bekannt sind, insbesondere mit Diolen.

Verfahren zur Herstellung der PU-Prepolymere sind dem Fachmann ebenfalls bekannt. Die Menge der Isocyanate wird dabei so im stöchiometrischen Überschuss gewählt, dass NCO-funktionelle PU-Prepolymere erhalten werden. Durch die Wahl des NCO:OH-Verhältnisses kann ein Molekulargewichtsaufbau bei der Synthese vermieden werden. Ebenso kann durch Auswahl von asymmetrischen Isocyanaten der Anteil an nicht reagierten Restmonomeren im Prepolymer vermindert werden. Eine andere Herstellungsart destilliert einen Überschuss an unreagierten Isocyanaten aus der Reaktionsmischung ab. Anschließend können die Isocyanatgruppen mit Epoxidgruppen-enthaltenen Alkoholen umgesetzt werden.

Als Polymere mit Epoxidgruppen sind bevorzugt die bekannten Polyepoxidharze geeignet, die mindestens zwei Epoxidgruppen pro Molekül tragen. Das EpoxidÄquivalent dieser Polyepoxide kann in weiten Grenzen ausgewählt werden, beispielsweise zwischen 50 und 1000 g/ mol Epoxid. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die bekannten Polyglycidylether ein, die durch Reaktion von Epichlorhydrin mit einem Polyphenol in Gegenwart von Alkali hergestellt werden. Hierfür geeignete Polyphenole sind beispielsweise Resorcinol, Brenzkatechin, Hydrochinon, Bisphenol A (Bis-(4-Hydroxy-phenyl)-2,2-propan), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan oder 1,5-Hydroxy-naphthalin. Es ist auch möglich entsprechende Aminoverbindungen zu Epoxidharzen umzusetzen. Ebenso können Hydroxyalkyl- oder Aminoalkylaromaten umgesetzt werden. Insbesondere werden bei Raumtemperatur fließfähige Epoxidharze eingesetzt, die in der Regel ein Epoxid-Äquivalentgewicht von 50 bis etwa 300 g/mol Epoxid haben,

In einer besonders bevorzugten Ausführungsform handelt es sich bei der Komponente A um Epoxidverbindungen der Formel (II), die einen aromatischen Kern aufweisen.

(II) R³-Ring-(- CH₂-N(R⁴)_{b})_{c}

mit
R³ = H, CH₃, C₂H₅
b =1,2
c = 1,2, 3 oder 4
R⁴ = C₃ bis C₈-Alkyl mit einer Epoxidgruppe
Ring = Phenyl, Diphenyl, Naphthyl,

Dieser aromatische Kern kann beispielsweise Phenyl-, Diphenyl-, Naphtyleinheiten umfassen, die gegebenenfalls auch Alkylsubstituenten tragen können. Bevorzugt ist b = 2 und c = 2 oder 3. Insbesondere handelt es sich um Bausteine, die nicht in para-Stellung mit den funktionellen Resten substituiert sind. Geeignete Beispiele für solche aromatischen Bausteine sind 1,3 substituierte Phenyle, 2,2' oder 2,4' substituierte Biphenyle, 2,4' substituierte Methylen-diphenylstrukturen. Insbesondere geeignet sind Epoxidgruppen-substituierte Derivate des m-Xylylendiamines, des m-Xylylendiisocyanats oder von Resorcinol.

Die erfindungsgemäß geeigneten Polyepoxidverbindungen der Komponente A sollen von 2 bis 10 Epoxidgruppen aufweisen, insbesondere 2, 4 oder 6 pro Molekül. Eine besondere Ausführungsform der Polyepoxidverbindung weist die Epoxidgruppen am Kettenende oder als Seitenkettenende einer Verbindung auf. Die Polyepoxidverbindungen können einzeln oder als Gemisch mit unterschiedlichen Strukturen vorliegen.

Um geeignete Applikationseigenschaften zu erhalten, wie Viskosität oder Kohäsion, soll das Molekulargewicht (zahlenmittleres Molekulargewicht, M_{N}, wie über GPC bestimmbar) zwischen 200 bis 5000 g/mol betragen, bevorzugt 250 bis 5000 g/mol, insbesondere 250 bis 2500 g/mol. Dabei sind für lösemittelfreie Klebstoffe eher niedrige Molekulargewichte bevorzugt, für lösemittelhaltige Systeme können auch höhere Molekulargewichte ausgewählt werden.

Als mit der Komponente A vernetzende zweite Komponente B enthält das erfindungsgemäße Bindemittelsystem aromatische Verbindungen, die primäre Aminogruppen aufweisen müssen. Es handelt sich dabei um Verbindungen der Formel

(I) R¹-Phenyl-(- R²)ₐ

mit
R¹ = H, C₁ bis C₆ - Alkyl
a = 1,2 oder 3
R² = -O-CH₂-CHOH-CH₂-NH-CH₂-Phenyl-CH₂-NH₂
bevorzugt a = 2 oder 3 und R¹ = H

Diese Verbindungen können beispielsweise hergestellt werden aus aromatischen Gycidylethern, die mit einem Überschuss an Di-Aminoalkyl-benzol umgesetzt werden. Als Di- oder Triepoxide mit aromatische Kernen sind insbesondere die Umsetzungsprodukte von Brenzcatechin, Resorcin, Hydrochinon, Pyrogallol, Phloroglucin, 2,4-Hydroxy-Toluol, gegebenefalls auch 1,3- oder 1,5- oder 1,6- Dinaphthol geeignet. Diese können mit beispielsweise Epichlorhydrin oder analogen Verbindungen zu Di- oder Tri-Epoxid substituierten Verbindungen umgesetzt werden. Als aromatisches Diamin zur weiteren Umsetzung ist insbesondere das Xylylendiamin (XDA) als Aminkomponente geeignet, insbesondere das mXDA.

Das Mengenverhältnis von Aminogruppen des Diamins, wie XDA, zu den Glycidylgruppen soll so gewählt werden, dass ein Überschuss von Aminogruppen vorhanden ist und alle Epoxidgruppen umgesetzt werden. Es entstehen also eine e-poxidfreie Komponente B. In einer Ausführungsform soll das Epoxid/NH- Verhältnis 0,9:4 bis 1,1:4 betragen (berechnet als H-acide NH-Gruppen). Eine andere Ausführungsform wählt die Menge der Epoxidgruppen zu der Menge der NH-Funktionalität so, dass ein Überschuss an nicht abreagiertem XDA vorliegt. In diesem Fall ist die Komponente B ein Gemisch aus XDA und einer Verbindung der Formel (I). Dabei sollen die Ausgangsmaterialien so gewählt werden, dass höchstens 50 Gew-% bezogen auf die Komponente A an nicht umgesetztem Diamin enthalten sind. Eine weitere Ausführungsform wählt die Mengenverhältnisse zur Herstellung von Komponente B so, dass dabei ein Molekulargewichtsaufbau eintritt. Dabei kann das Epoxid/NH-Verhältnis beispielsweise von 1,1:4 bis 1,6:4 betragen.

Die Umsetzung zur Herstellung erfindungsgemäß geeigneten Härterkomponente B ist bekannt. Dabei werden die geeigneten Di- oder Tri-Epoxidverbindungen zusammen mit der entsprechenden Menge des XDA, insbesondere mXDA, gemischt und ggf. unter leichten Erwärmen umgesetzt. Das kann gegebenenfalls auch in Lösemitteln durchgeführt werden. Diese kann man nach der Reaktion bei Bedarf durch Destillation entfernen.

Die erfindungsgemäß als Komponente B geeigneten Verbindungen weisen primäre Aminogruppen auf. Weiterhin enthalten sie sekundäre Aminogruppen sowie zusätzlich OH-Gruppen. Das Molekulargewicht dieser Verbindungen kann zwischen ca. 450 bis 2500 g/mol betragen, insbesondere bis ca. 1500 g/mol.

Aus den geeigneten Epoxidharzen als Komponente A und den Polyaminoverbindungen der Komponente B sind erfindungsgemäße 2K-Zusammensetzungen herzustellen. Dabei werden die beiden Komponenten im flüssigen Zustand gemischt, wobei das Verhältnis Aminogruppen (als NH-Gruppe) zu Epoxidgruppen ungefähr äquimolar sein soll. Insbesondere beträgt das Verhältnis ca. 0,75 : 1 bis 1,25 : 1, insbesondere 0,95 : 1 bis 1,05:1, um einen Überschuss an nicht umgesetzten Aminogruppen zu vermeiden. Die beiden Komponenten werden getrennt gelagert und vor der Verarbeitung gemischt. Danach vernetzen die Bestandteile.

Aus den oben beschriebenen Zusammensetzungen können 2K-Kaschierklebstoffe hergestellt werden. In diesen Kaschierklebstoffen ist es zweckmäßig, dass zusätzliche Bestandteile enthalten sind, wie beispielsweise Lösemittel, Weichmacher, Katalysatoren, Stabilisatoren, Haftvermittler, Pigmente oder Füllstoffe.

In einer Ausführungsform enthält der erfindungsgemäß geeignete Klebstoff mindestens ein klebrigmachendes Harz. Das Harz bewirkt eine zusätzliche Klebrigkeit. Es können grundsätzlich alle Harze eingesetzt werden, die verträglich sind, d.h. ein weitgehend homogenes Gemisch bilden. Es können beispielsweise aromatische, aliphatische oder cycloaliphatische Kohlenwasserstoff-Harze sein, sowie modifizierte oder hydrierte Versionen davon. Die Harze besitzen im Allgemeinen ein niedriges Molekulargewicht unter 1500 g/mol, insbesondere unter 1000 g/mol. Das Harz kann in einer Menge von 0 bis 50 Gew.-% eingesetzt werden, bevorzugt bis zu 20 Gew.-% bezogen auf den Klebstoff.

Weiterhin können auch Weichmacher enthalten sein, wie beispielsweise Weißöle, naphtenische Mineralöle, paraffinischen Kohlenwasserstofföle, Polypropylen-, Polybuten-, Polyisopren-Oligomere, hydrierte Polyisopren- und/oder Polybutadien-Oligomere, Phthalate, Adipate, Benzoatester, pflanzliche oder tierische Öle und deren Derivate eingesetzt werden. Insbesondere sind solche Weichmacher geeignet, die lebensmittelrechtlich unbedenklich sind.

Als gegebenenfalls einsetzbare Stabilisatoren oder Antioxidantien sind Phenole, sterisch gehinderte Phenole hohen Molekulargewichts, polyfunktionelle Phenole, schwefel- und phosphorhaltige Phenole oder Amine geeignet.

Es ist möglich, dem Klebstoff zusätzlich Silanverbindungen als Haftvermitteler zuzusetzen. Als Haftvermittler können die bekannten organofunktionelle Silane zugesetzt werden, wie (meth)acryloxyfunktionelle, epoxidfunktionelle, aminfunktionelle oder nicht reaktiv substituierte Silane eingesetzt werden. Beispiele dafür sind Vinyltrialkoxysilan, Alkyltrialkoxysilan, Tetraalkoxysilane, 3-Acryloxypropyl-trialkoxysilan, 3-Methacryloxypropyltrialkoxysilan, 3-Aminopropyltrimethoxysilan, 3-Aminopropyltriethoxysilan, 3-Aminopropylmethyldimethoxysilan, N-(2-Aminoethyl)-3-aminopropyltrimethoxysilan, 3-Glycidyloxymethyltrimethoxysilan, 3-Glycidyloxy-methyltriethoxysilan, 2-Glycidyloxyethyltrimethoxysilan, oder entsprechende Dialkoxyderivate, wobei bevorzugt Butoxy-, Propoxy-, insbesondere Methoxy oder Ethoxy -Gruppen geeignet sind. In einer bevorzugten Ausführungsform werden dem Klebstoff 0,1 bis 5 Gew.-% solcher Silane zugesetzt. Es ist dabei je nach Auswahl des Silans zweckmäßig, dieses nur in einer Komponente zu mischen. Damit kann eine vorzeitige Reaktion und eine Verminderung der Lagerstabilität verhindert werden.

Als gegebenenfalls zusätzlich vorhandenes Additiv kann ein erfindungsgemäßer Klebstoff auch Katalysatoren enthalten. Als Katalysatoren können alle bekannten Verbindungen eingesetzt werden, die die Reaktion von Aminogruppe und Epoxidgruppe katalysieren können. Beispiele hierfür sind Titanate, wie Tetrabutyltitanat oder Titantetraacetylacetonat; Wismutverbindungen, wie Bismut-tris-2-ethylhexanoat; Zinncarboxylate, wie Dibutylzinndilaurat (DBTL), Dibutylzinndiacetat oder Dibutylzinndiethylhexanoat,; Zinnoxide wie Dibutylzinnoxid und Dioctylzinnoxid; Organoaluminumverbindungen wie Aluminumtrisacetylacetonat; Chelatverbindungen wie Zirconiumtetraacetylacetonat; Aminverbindungen oder ihre Salze mit Carbonsäuren, wie Octylamin, Cyclohexylamin, Benzylamin, Dibutylamin, Monoethanolamin, Triethanolamin, Diethylenetriamin, Triethylenetetramin, Triethylenediamin, Guanidin, Morpholin, N-methylmorpholin und 1,8-Diazabicyclo-(5,4,0)-undecen-7 (DBU), Silanhaftvermittler mit Aminogruppen. Der Katalysator, wird in einer Menge von 0,01 bis etwa 5 Gew.-% bezogen auf das Gesamtgewicht des Klebstoffs eingesetzt, bevorzugt von 0,05 bis 1 Gew.-%, besonders bevorzugt mehr als 0,1 Gew.-% Katalysator.

Eine besondere Ausführungsform der Erfindung setzt zu den Beschichtungsmitteln noch Pigmente ein. Es handelt sich dabei um feinteilige Pigmente, beispielsweise mit einer Teilchengröße < 5 µm. Eine Ausführungsform der Erfindung arbeitet mit plättchenförmigen Pigmenten, die in einer Komponente des Bindemittels dispergiert werden können. Sie liegen danach in feinverteilter Form vor, d.h. die Pigmente oder Füllstoffe sind plättchenförmig dispergiert, weisen also nur eine geringe Dicke auf. Solche Pigmente sind dem Fachmann bekannt, beispielsweise Schichtsilikate verschiedener Zusammensetzung. Eine andere Arbeitsweise setzt Nanopartikel ein. Diese haben üblicherweise eine Teilchengröße < 500 nm, insbesondere kleiner 100 nm. Bei solchen Nanopigmenten kann es sich beispielsweise um solche handeln, die auf Basis von TiO₂, SiO₂, Fe₂O₃ oder ähnliche Oxide oder O-xihydrate. Dem Fachmann sind solche Pigmente bekannt. Er kann sie nach üblichen Gesichtspunkten auswählen und mittels bekannter Verfahren in einem oder beiden Bindemittelkomponenten feindispergieren.

Erfindungsgemäß können die Klebstoffe auch Lösemittel enthalten. Es handelt sich dabei um die üblichen Lösemittel, die bei Temperaturen bis zu 120°C verdampfen können. Die Lösemittel können ausgewählt aus der Grupppe der aliphatischen Kohlenwasserstoffe, der aromatischen Kohlenwasserstoffe, Ketone, insbesondere C₁-C₄-Alkohole oder auch Wasser. In einer bevorzugten Ausführungsform ist der 2K-Klebstoff lösemittelfrei.

Da die Klebstoffe insbesondere zum Beschichten von großen Flächen geeignet sind, sollen sie bei Auftragstemperatur von ca. 20 bis 90°C eine niedrige Viskosität aufweisen. Die Viskosität der erfindungsgemäßen Kaschierklebstoffe, gemessen unmittelbar nach dem Mischen der Bestandteile, soll zwischen 200 bis 5000 mPas bei Auftragstemperatur betragen, bevorzugt 300 bis 3000 mPas (bei 20 bis 60°C, Brookfield-Viskosimeter, gemäß EN ISO 2555).

Als Folienmaterialien zum Herstellen von Mehrschichtfolien können die bekannten flexiblen Folien eingesetzt werden. Es handelt sich dabei um Substrate aus thermoplastischen Kunststoffen in Folienform, beispielsweise Polyolefine, wie Polyethylen (PE) oder Polypropylen (PP, CPP, OPP), Polyvinylchlorid (PVC), Polystyrol (PS), Polyestern, wie PET, Polyamid, organische Polymere, wie Cellophan, es sind auch Metallfolien oder Papier als Substrate möglich. Dabei könne die Folienmaterialen auch modifiziert sein, z.B. durch Modifizieren der Polymere mit funktionellen Gruppen, oder es können zusätzliche Komponenten, beispielsweise Pigmente, Farbstoffe, oder geschäumte Schichten in der Folie enthalten sein. Es kann sich um gefärbte, bedruckte, farblose oder transparente Folien handeln.

In den 2K-Kaschierklebstoffen können die bekannten Hilfsmittel und Additive zu der Komponente A oder zu der Komponente B gegeben werden, so lange diese nicht mit den Additiven reagieren. Es können Lösemittel enthalten sein, eine besondere Ausführungsform der Erfindung arbeitet jedoch lösemittelfrei. Dabei kann insbesondere durch die Auswahl der Komponente A und der Komponente B sichergestellt werden, dass bei Raumtemperatur wie 25 °C eine niedrigviskose Mischung der Komponente A und B erhalten wird.

Der erfindungsgemäße Klebstoff kann insbesondere als Kaschierklebstoff eingesetzt werden. Dabei werden die Klebstoffe in dünner Schicht auch eine Folie aufgetragen. Unmittelbar danach sollen die gegebenenfalls enthaltenen Lösemittel verdampfen, danach wird eine zweite Folie auf die Klebstoffschicht aufgebracht und mit Druck verpresst. Durch die erfindungsgemäße Auswahl mit niedriger Viskosität können auch Lösemittel vermieden werden.

Eine besondere Ausführungsform der Erfindung besteht in der Bereitstellung eines wasserlöslichen 2K-Klebstoffs. Dabei ist es vorteilhaft, wenn die Komponenten eine erhöhte Anzahl von polaren Gruppen aufweisen, um eine verbesserte Wasserlöslichkeit oder Wassermischbarkeit aufzuweisen. In diesem Falle ist es zusätzlich vorteilhaft, als weitere Bestandteile Emulgatoren oder Dispergierhilfsmittel einzusetzen. Diese unterstützen auch in geringen Mengen die Dispergierbarkeit der Komponenten in Wasser. Dabei sollen die Emulgatoren in Mengen von 0,1 bis 5 Gew.-% bezogen auf die Zusammensetzung zugemischt werden. Nach dem Mischen der beiden Komponenten und der Vernetzung bildet sich ein Netzwerk. Dieses ist nicht mehr wasserlöslich, weist aber trotzdem gute Barriereeigenschaften auf.

Eine weitere Ausführungsform der Erfindung setzt die 2K-Zusammensetzungen für 2K-Überzugsmittel ein. Diese Überzugsmittel können im Prinzip die gleichen Bestandteile enthalten, die für die Kaschierklebstoffe beschrieben sind. Es ist bei der Auswahl jedoch darauf zu achten, dass die Überzugsmittel nach der Vernetzung eine glatte, nicht klebrige Oberfläche aufweisen. Eine gute Haftung soll nur zu dem Substrat bestehen, auf dem das Beschichtungsmittel in flüssiger Form aufgebracht wird.

Dem Fachmann sind solche Bestandteile bekannt, die bei der Herstellung von nicht klebrigen Oberflächen nur im geringen Masse eingesetzt werden sollen oder zu vermeiden sind. Beispiele für solche Bestandteile sind geringe Mengen Weichmacher, geringe Mengen klebrigmachender Harze oder Bindemittel mit niedriger Glasübergangstemperatur.

Ebenfalls Gegenstand der Erfindung ist eine Mehrschichtfolie, die mit einem erfindungsgemäß geeigneten Kaschierklebstoff verklebt ist, dabei können als Substrate die bekannten Kunststofffolien eingesetzt werden, beispielsweise aus Polypropylen, Polyethylen, Polyester, PVC, Polyamid oder andere. Auf diese Folie wird mit einem erfindungsgemäßen Klebstoff eine kontinuierliche Schicht erzeugt, die unmittelbar nach dem Auftragen mit einer zweiten gleichen oder unterschiedlichen Folie verklebt wird. Zusätzlich zu den Zweischichtfolien ist es ebenso möglich, mit weiteren Arbeitsschritten eine Mehrschichtfolie zu erzeugen. Eine erfindungsgemäße Ausführungsform arbeitet mit durchsichtigen Folien, dafür ist es zweckmäßig wenn der erfindungsgemäße Klebstoff ebenfalls durchsichtig und nicht verfärbt wird. Es können in diesen Mehrschichtfolien auch andere nicht-Kunststofffolien enthalten sein, beispielsweise Papier oder Metallfolien.

Eine besonders vorteilhafte Eigenschaft der erfindungsgemäßen Klebstoffschichten ist eine erhöhte Barrierewirkung der Schicht. Es hat sich gezeigt, dass Aromastoffe solche Mehrschichtfolien schlechter durchdringen können als konventionell verklebte Folien. Auch ist eine verbesserte Stabilität gegen Diffusion von Gasen, beispielsweise Sauerstoff, oder Wasserdampf festzustellen.

Der erfindungsgemäße Klebstoff zeigt eine gute Haftung zwischen den unterschiedlichen Schichten. Er zeigt keine Blasen oder Fehlstellen in der Klebstoffschicht.

Ein weiterer Gegenstand der Erfindung ist die Verwendung der erfindungsgemäßen Zusammensetzung zum Herstellen von Überzügen auf flexiblen Verbundsubstraten. Dabei können die oben angegebenen Additive und Hilfsstoffe im Beschichtungsmittel enthalten sein. Die Beschichtungsmittel sind flüssig oder können durch Erwärmen auf bis zu 90°C fließfähig aufgebracht werden. Diese Überzüge sind nach der Vernetzung flexibel und können deswegen besonders für flexible Mehrschichtfolien eingesetzt werden. Eine bevorzugte Ausführungsform trägt die erfindungsgemäßen Beschichtungsmittel bei einer Applikationstemperatur zwischen 20 bis 60°C auf. Dabei soll die Viskosität gemessen bei dieser Temperatur von 200 bis 3000 mPas betragen, insbesondere bis 1500 mPas.

Nach dem Vernetzen werden feste an der Oberfläche nicht klebrige Schichten erhalten. Solche Folien können dann auf bekannte Weise weiterverarbeitet werden, entweder zusätzliche Kaschierschichten aufgebracht werden oder konfektioniert werden.

Die geeigneten Bindemittel können auf einfache Art und Weise zu 2K-Beschichtungsmittel oder 2K-Klebstoffen weiterverarbeitet werden. Bei Verwendung dieser Klebstoffe oder Beschichtungsmittel auf Foliensubstraten, werden Verbundfolien erhalten, die hohe Barriereeigenschaften aufweisen. Die Barriereeigenschaften können auf verschiedene Bestandteile bezogen werden, beispielsweise kann die Diffusion von Sauerstoff vermindert werden. Eine andere Ausführungsform vermindert die Diffusion von Wasser. Weiterhin ist es möglich, die Diffusion von Aromastoffen zu vermindern.

Die erfindungsgemäß hergestellten Verbundfolien weisen eine hohe Flexibilität auf. Sie können transparent ausgeführt sein, d.h. sie enthalten nur Nanopartikel als Füllstoffe oder keine Füllstoffe, es kann sich aber auch um gefärbte oder pigmentierte Schichten handeln. Die Haftung zu den verschiedenen Substratmaterialien ist gut. Auch bei mechanischer Belastung der Verbundmaterialien, beispielsweise der verklebten Folien, ist keine Trennung zwischen verklebten Flächen zu beobachten. Aus den erfindungsgemäßen Verbundmaterialien können beispielsweise Verpackungen hergestellt werden. Durch die Barrierewirkung sind solche Verpackungen für empfindliche Gegenstände geeignet, beispielsweise für Lebensmittel oder pharmazeutische Güter.

### Beispiel 1

### Klebstoff, erfindungsgemäß

Komponente A : Tetraglycidyl-m-Xylylendiamin
   Epoxid Äquivalentgewicht ca. 102 g/ mol Epoxid
Komponente B : m-Resorcinol-Diglycidylether wird mit m-Xylylendiamin im Molverhältnis 1 : 3 umgesetzt (Aminäquivalentgewicht ca. 55 g/mol NH).

Es wird ein Klebstoff hergestellt aus 1,5 Teilen A sowie 1,0 Teil B. Die Komponenten werden bei 40°C gemischt und auch bei dieser Temperatur aufgetragen. Eine Vernetzung ist nach 60 Minuten festzustellen.

### Beispiel 2

Es wird ein Bindemittelsystem analog zu Beispiel 1 hergestellt. Zu diesem wird, enthalten in der Komponente B, 0,5 % DBTL als Katalysator zugegen.

Der 2K-Klebstoff (B. 1 und B. 2) hat nach dem Mischen eine Viskosität von 1000 mPas bei 40°C.

### Weitere Versuche

| Zusatzbestandteil | Menge Gew-% | Beispiel |
|---|---|---|
| Ethylacetat | 30 | Nr. 3 |
| Ethanol | 15 | Nr. 4 |
| Kolophoniumharz | 5 | Nr. 5 |
| Ethylacetat | 5 | |
| Aminosilan AMMO | 1,5 | Nr. 6 |
| UV-Stabilisator | 1 | Nr. 7 |

Es werden verschiedene Additive in den Klebstoff nach Beipiel 1 eingebracht. Die angegebenen Mengen beziehen sich auf die gesamte 2K-Klebstoffmischung. Harz, Stabilisator, Haftvermittler werden in die Komponente B zugemischt, die Lösemittel nach B. 3 und 4 werden in gleichem Anteil beiden Komponenten zugesetzt.

### Vergleichsversuch 8

Es wird ein handelsüblicher Polyurethankaschierklebstoff der Firma Henkel (Handelsname UR 7782 mit UR 6083) gemischt.
Dabei besteht die eine Komponente aus einem OH-haltigen Polyesterbindemittel, Molekulargewicht ca. 2200 g/mol und die Vernetzerkomponente aus aromatischen Isocyanatprepolymeren auf Basis von TDI-Umsetzungsprodukten. Die beiden Komponenten werden im NCO : OH-Verhältnis von ca. 1 : 1 gemischt und als Kaschierklebstoff eingesetzt.

Es werden folgende Folien miteinander verklebt:
PET (Polyethylenterephtalat) (ca. 12 µm)
PE (Polyethylen)
OPP (orientiertes Polypropylen)
OPA (orientieres Polyamid)
SiOx-PET (Siloxanbeschichtetes Polyethylenterephthalat)

Es werden aus den Klebstoffen 1, 2 und 8 auf die Foliensubstrate mit einem Laborcoater dünne Schichten des Klebstoffs aufgetragen (2 g/m²) und unmittelbar danach mit einer zweiten Folie verklebt. Nach 48 Std. Lagerung bei RT (25° C) wird die Durchlässigkeit bestimmt.

**Tabelle (0₂ Durchlässigkeit)**

| Folie | Klebstoff B.1 | B.1 | B.2 | Vergleich B.8 | Vergleich B.8 |
|---|---|---|---|---|---|
| | Bedingung 1 | Bedingung 2 | Bedingung 1 | Bedingung 1 | Bedingung 2 |
| PET/EP | 23,7 | 24,5 | 24 | 115 | 102 |
| OH/OH | 47,5 | 51 | 45,5 | 145 | 135 |
| OPP/PE | 33 | 30 | 31 | 160 | 145 |
| PE/PET-SiOx | 11,8 | 10 | 11 | 19 | 15 |
| OPA/PE | 15 | 14 | 13 | 60 | 45 |

| | | | | | |
|---|---|---|---|---|---|
| Bedingung1: gemessen = OTR bei 50 % rel.-Luftfeuchtigkeit, Normaldruck 0₂ Durchlässigkeit [cm³/m² · 24h ·1 bar] Bedingung2: gemessen = OTR bei 0 % rel.-Luftfeuchtigkeit, Normaldruck 0₂ Durchlässigkeit [cm³/m² · 24h ·1 bar] (02 -Durchlässigkeit nach DIN 53380) | | | | | |

Die Barriere-Wirkung des erfindungsgemäßen Klebstoffs ist besser als die von PU-Klebstoffen.

**Tabelle (Haftung)**

| Folie | B.1 | B.2 | Vergleich |
|---|---|---|---|
| | | | B.8 |
| OPP/OPP | 2,1 | 2,0 | 1,8 |
| OPP/PE | 2,3 | 2,2 | 1,7 |
| OPA/PE | 1,9 | 2,5 | 1,9 |
| PET/PE | 2,6 | 2,3 | 1,9 |

Gemessen: Haftung Instron, 2 d Vernetzung bei RT [N/15 mm]
Nach DIN 53504
Die Testverklebungen werden wie oben angegeben hergestellt.
Analog werden auch verklebte OPP/OPP -Folien der Beispiele 3,4,5,6 hergestellt und auf Haftung geprüft.
Die Haftung ist besser als die des Vergleichsklebstoffs.

## Patentansprüche

1. Zwei-Komponenten-Zusammensetzung bestehend aus einer Komponente A enthaltend ein Polymeres mit einem zahlenmittleren Molekulargewicht M_{N}, wie über GPC bestimmbar, von 250 bis 5000 g/mol, das mindestens 2 Epoxidgruppen pro Molekül aufweist, einer Komponente B enthaltend eine Verbindung der Formel (I)
(I) R¹-Phenyl-(- R²)ₐ
mit
R¹ = H, C₁ bis C₆ - Alkyl
a = 1,2,oder 3
R² = -O-CH₂-CHOH-CH₂-NH-CH₂-Phenyl-CH₂-NH₂
wobei das Epoxid/NH-Verhältnis, berechnet als NH-Gruppen, der Komponenten A zu B zwischen 0,75: 1 bis 1,25:1 beträgt,
**dadurch gekennzeichnet dass** die Komponente A eine Verbindung der Formel (II) enthält:
(II) R³-Ring-(- CH₂-N(R⁴)_{b})_{c}
mit
R³ = H, CH₃, C₂H₅
b = 1 oder 2
c = 1,2, 3 oder 4
R⁴ = C₃ bis C₈-Alkyl mit einer Epoxidgruppe
Ring = Phenyl, Biphenyl, Naphthyl.

2. 2K-Zusammensetzung nach Anspruch 1, **dadurch gekennzeichnet, dass** das Polymere A ausgewählt ist aus Poly(meth)acrylaten, Polyolefinen, Polybutadienen, Polyestern, Polyamiden, Polyurethanen oder aromatischen Polyepoxidharzen.

3. 2K-Zusammensetzung nach Anspruch 2, **dadurch gekennzeichnet, dass** die Verbindung (II) einen Phenylring aufweist, mit R³ = H, R₄ = C3 bis C5-Alkyl mit endständiger Epoxidgruppe und b = 2 und c = 2 oder 3.

4. 2K-Zusammensetzung nach einem der Ansprüche 1 bis 3, **dadurch gekennzeichnet, dass** Komponente B zusätzlich bis zu 50 Gew.% mXDA enthält.

5. 2K-Zusammensetzung nach Anspruch 4, **dadurch gekennzeichnet, dass** Komponente B hergestellt wird als Umsetzungsprodukt aus aromatischen Epoxiden enthaltend einen aromatischen Ring und zwei oder drei Glycidylethersubstituenten mit mXDA mit einem Verhältnis Epoxidgruppe : NH-Gruppen von 0,5 : 4 bis 1,6 : 4, insbesondere von 0,9 bis 1,1 : 4.

6. 2K-Zusammensetzung nach einem der Ansprüche 1 bis 5, **dadurch gekennzeichnet, dass** Komponente A ein Epoxidpolymer auf Basis eines Xylylendiamins ist und Komponente B mindestens 50 % eines Polyamins enthält, das ein Umsetzungsprodukt aus Xylylendiamin mit Epoxidgruppen haltigen Resorcinol, Pyrogallol, Phloroglucin oder Hydroxyhydrochinon ist.

7. 2K-Zusammensetzung nach einem der vorhergehenden Ansprüche enthaltend zusätzlich Katalysatoren, Lösemittel, Wasser, Weichmacher, Haftvermittler, Harze, Neutralisationsmittel, Emulgatoren, Stabilisatoren und/oder Pigmente.

8. 2K-Zusammenstzung nach Anspruch 7, **dadurch gekennzeichnet, dass** der Klebstoff C₁ bis C₄-Alkohole oder Wasser als Lösemittel enthält oder frei von organischen Lösemitteln ist.

9. 2K-Zusammensetzung nach einem der Ansprüche 7 und 8, **dadurch gekennzeichnet, dass** als Haftvermittler 0,1 bis 5 Gew-% Silane mit 1,2,3 oder 4 hydrolysierbaren Gruppen enthalten sind, insbesondere Aminosilane oder Epoxysilane.

10. Verwendung einer 2K-Zusammensetzung nach einem der Ansprüche 7 bis 9 als Klebstoff zum Kaschieren von Folien und Papier.

11. Verwendung eines 2K-Zusammensetzung nach einem der Ansprüche 1 bis 6 als Beschichtungsmittel für flexible Folien.

12. Verwendung nach einem der Ansprüche 10 und 11 als Beschichtung mit Barriereeigenschaften.

13. Verwendung nach einem der Ansprüche 10 bis 12 als Beschichtung für Lebensmittelverpackungen.

## Claims

1. Two-component composition composed of a component A containing a polymer which has a number average molecular weight M_{N}, as determinable by GPC, of 250 to 5000 g/mol, and which contains at least 2 epoxy groups per molecule, and a component B containing a compound of formula (I)
(I) R¹-phenyl-(-R²)ₐ,
where
R¹ = H, C₁ to C₆ alkyl
a = 1, 2, or 3
R² = -O-CH₂-CHOH-CH₂-NH-CH₂-phenyl-CH₂-NH₂
wherein the epoxy/NH ratio, calculated as NH groups, of component A to component B is between 0.75: 1 and 1.25:1,
**characterized in that** component A contains a compound of formula (II):
(II) R³-Ring-(-CH₂-N(R⁴)_{b})_{c},
where
R³ = H, CH₃, C₂H₅
b = 1 or 2
c = 1, 2, 3, or 4
R⁴ = C₃ to C₈ alkyl containing one epoxy group
Ring = phenyl, biphenyl, naphthyl.

2. 2K composition according to Claim 1, **characterized in that** polymer A is selected from poly(meth)acrylates, polyolefins, polybutadienes, polyesters, polyamides, polyurethanes, or aromatic polyepoxy resins.

3. 2K composition according to Claim 2, **characterized in that** compound (II) contains a phenyl ring, where R³ = H, R₄ = C₃ to C₅ alkyl with a terminal epoxy group, and b = 2 and c = 2 or 3.

4. 2K composition according to one of Claims 1 through 3, **characterized in that** component B additionally contains up to 50% by weight mXDA.

5. 2K composition according to Claim 4, **characterized in that** component B is prepared as the reaction product of aromatic epoxides containing an aromatic ring and two or three glycidyl ether substituents containing mXDA, with an epoxy group to NH group ratio of 0.5 : 4 to 1.6 : 4, in particular 0.9 : 4 to 1.1 : 4.

6. 2K composition according to one of Claims 1 through 5, **characterized in that** component A is an epoxy polymer based on xylylene diamine, and component B contains at least 50% of a polyamine which is a reaction product of xylylene diamine with resorcinol, pyrogallol, phloroglucin, or hydroxyhydroquinone containing epoxy groups.

7. 2K composition according to one of the preceding claims, additionally containing catalysts, solvents, water, softeners, bonding agents, resins, neutralizing agents, emulsifiers, stabilizers, and/or pigments.

8. 2K composition according to Claim 7, **characterized in that** the adhesive contains C₁ to C₄ alcohols or water as solvent, or is free of organic solvents.

9. 2K composition according to one of Claims 7 and 8, **characterized in that** 0.1 to 5% by weight silane having 1, 2, 3, or 4 hydrolyzable groups, in particular aminosilane or epoxysilane, is contained as bonding agent.

10. Use of a 2K composition according to one of Claims 7 through 9 as adhesive for laminating films and paper.

11. Use of a 2K composition according to one of Claims 1 through 6 as a coating agent for flexible films.

12. Use according to one of Claims 10 and 11 as a coating having barrier properties.

13. Use according to one of Claims 10 through 12 as a coating for food packaging.

## Revendications

1. Composition à deux composants constituée d'un composant A contenant un polymère de poids moléculaire moyen en nombre M_{N}, comme déterminable par CPG, de 250 à 5000 g/mol, qui présente au moins 2 groupes époxydes par molécule, d'un composant B contenant un composé de formule (I) :
(I) R¹-phényl-(-R²)ₐ
où
R¹ = H, alkyle C₁ à C₆
a = 1, 2 ou 3
R² = -O-CH₂-CHOH-CH₂-NH-CH₂-phényl-CH₂-NH₂
le rapport époxyde/NH, étant calculé par groupes NH, du composant A par rapport au composant B se situe entre 0,75 : 1 et 1,25 : 1,
**caractérisé en ce que** le composant A contient un composé de formule (II) :
(II) R³-cycle-(-CH₂-N(R⁴)_{b})_{c}
où
R³ = H, CH₃, C₂H₅
b = 1 ou 2
c = 1, 2, 3 ou 4
R⁴ = alkyle C₃ à C₈ avec un groupe époxyde
cycle = phényle, biphényle, naphtyle.

2. Composition à deux composants selon la revendication 1 **caractérisée en ce que** le polymère A est choisi parmi les poly(méth)acrylates, polyoléfines, polybutadiènes, polyesters, polyamides, polyuréthanes ou résines polyépoxydes aromatiques.

3. Composition à deux composants selon la revendication 2 **caractérisée en ce que** le composé (II) présente un cycle phényle, avec R³ = H, R⁴ = alkyle C₃ à C₅ avec un groupe époxyde terminal, b = 2 et c = 2 ou 3.

4. Composition à deux composants selon l'une des revendications 1 à 3 **caractérisée en ce que** le composant B contient en plus jusqu'à 50 % en poids de mXDA.

5. Composition à deux composants selon la revendication 4 **caractérisée en ce que** le composant B est préparé en tant que produit de réaction d'époxydes aromatiques contenant un cycle aromatique et deux ou trois substituants glycidyléthers, avec de la mXDA, avec un rapport groupe époxyde : groupes NH de 0,5 : 4 à 1,6 : 4, en particulier de 0,9 : 4 à 1,1 : 4.

6. Composition à deux composants selon l'une des revendications 1 à 5 **caractérisée en ce que** le composant A est un polymère époxyde à base de xylylènediamine et **en ce que** le composant B contient au moins 50 % d'une polyamine qui est le produit d'une réaction de la xylylènediamine avec des groupes époxydes contenant du résorcinol, du pyrogallol, du phloroglucinol ou de l'hydroxyhydroquinone.

7. Composition à deux composants selon l'une des revendications précédentes, contenant en plus des catalyseurs, des solvants, de l'eau, des plastifiants, des promoteurs d'adhérence, des résines, des neutralisants, des émulsifiants, des stabilisants et/ou des pigments.

8. Composition à deux composants selon la revendication 7, **caractérisée en ce que** l'adhésif contient des alcools C₁ à C₄ ou de l'eau comme solvants ou ne contient pas de solvant organique.

9. Composition à deux composants selon l'une des revendications 7 et 8, **caractérisée en ce que** 0,1 à 5 % en poids de silanes avec 1, 2, 3 ou 4 groupes hydrolysables, en particulier des aminosilanes ou des époxysilanes sont contenus comme promoteurs d'adhérence.

10. Utilisation d'une composition à deux composants selon l'une des revendications 7 à 9 comme adhésif pour stratifier des films et du papier.

11. Utilisation d'une composition à deux composants selon l'une des revendications 1 à 6 comme matériau de recouvrement pour des films flexibles.

12. Utilisation selon l'une des revendications 10 et 11 comme recouvrement à propriétés de barrière.

13. Utilisation selon l'une des revendications 10 à 12 comme recouvrement d'emballages de produits alimentaires.
